(19) Europäisches Patentamt
European Patent Office
Office européen des brevets

(11) **EP 4 311 094 A1**

(12) **EUROPEAN PATENT APPLICATION**

(43) Date of publication:
**24.01.2024 Bulletin 2024/04**

(21) Application number: **22186040.6**

(22) Date of filing: **20.07.2022**

(51) International Patent Classification (IPC):
***H02M 5/293*** (2006.01)    ***H02M 7/483*** (2007.01)
***H02M 1/32*** (2007.01)

(52) Cooperative Patent Classification (CPC):
**H02M 1/325; H02M 5/293; H02M 5/2932; H02M 7/4835**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hitachi Energy Ltd**
**8050 Zürich (CH)**

(72) Inventors:
- VASILADIOTIS, Michail
  8038 Zürich (CH)
- BUCHMANN, Beat
  5400 Baden (CH)
- GAUTSCHI, Matthias
  8155 Niederhasli (CH)

(74) Representative: **Epping - Hermann - Fischer Patentanwaltsgesellschaft mbH Schloßschmidstraße 5 80639 München (DE)**

(54) **DIRECT MULTI-TO-SINGLE-PHASE, MODULAR MULTI-LEVEL CONVERTER, ITS USE IN A RAILWAY INTERTIE AND METHOD FOR ITS OPERATION**

(57)    The disclosure relates to a direct multi-to-single-phase, modular multi-level converter, MMC (10), comprising a first AC interface (40) for connecting it to a multi-phase, first power grid (20), in particular a three-phase power grid, a second AC interface (50) for connecting it to a single-phase, second power grid (30), two groups of P phase-legs (80, 90), each phase-leg comprising N switching cells (60) connected in series between a respective one of P phases (L1, L2, L3) of the first AC interface (40) and a single phase (L) and neutral potential (N) of the second AC interface (50), respectively, wherein P≥2 and N≥3, and at least one controller, which is configured to control the first group of P phase-legs (80) and the second group of P phase-legs (90) to selectively provide a maximum apparent power at the first AC interface (40) and at the second AC interface (50), and, in response to the detection of at least one failed switching cell (60) of a first phase-leg, to switch the MMC (10) into a limited output mode of operation, wherein the MMC (10) provides a reduced maximum apparent power at the first AC interface (40) and/or at the second AC interface (50 by controlling at least the first phase-leg, based on a tuning factor $k_{1ph}$, to output a reduced phase-leg voltage

$$U_{PhLeg,pk}^{max} \cdot$$

.

The disclosure further relates to a railway intertie and a method for operating a direct multi-to-single-phase MMC (10).

Fig. 3

**Description**

The present disclosure relates to multi-level power converters in general, and to a direct multi-to-single-phase modular multi-level converter (MMC), three-to-single-phase, 3ph/1ph, AC/AC railway intertie, and a method for operating a direct multi-to-single-phase MMC in particular.

Direct multi-to-single-phase converters are used to directly supply energy from a multiphase power grid, such as a three-phase supply network, to a single-phase grid, or vice versa. In the conversion, the converter may match the voltages and/or operating frequencies of the respective power grids. For example, energy supplied through a high-voltage three-phase industrial grid having a first frequency of, for example, 50 Hz or 60 Hz, may be injected into a single-phase railway supply grid having a second frequency of, for example, 16.7 Hz or 25 Hz.

One important aspect in power grid converter design are harmonic distortions fed by the converter into the source and/or target power grid. Such distortions can be at least partially avoided by the use of multi-level converters (MLCs), such as modular multi-level converters (MMCs), where a number of switching cells can be individually activated or deactivated to better match a desired target waveform, such as a sinusoidal wave of a given frequency.

Another important aspect in power grid converter design is the availability of the converter. As such converters often form part of a critical infrastructure, they should remain operational even in case of component failures. In case of MMCs, this is typically achieved by providing redundant switching cells in the converter, which can take over the role of a defective switching cell on the fly.

It is an object of the present invention to describe improved or alternative MMCs and methods for their use and operation, which limit the number of harmonic distortions and/or achieve a high level of availability. Preferably, the disclosed MMCs should be simple in their design, easy to control and/or have a reduced component count compared to existing solutions.

Embodiments of the disclosure relate to devices, systems and methods for their operation, which reduce or overcome the need for providing redundant switching cells in a MMC.

According to a first aspect, a direct multi-to-single-phase, modular multi-level converter (MMC) is provided. The MMC comprises:

- a first alternating current, AC, interface for connecting the MMC to a multi-phase, first power grid, in particular a three-phase power grid;
- a second AC interface for connecting the MMC to a single-phase, second power grid;
- a first group of P phase-legs, wherein each phase-leg of the first group comprises N switching cells connected in series between a respective one of P phases of the first AC interface and a single phase of the second AC interface, wherein $P \geq 2$ and $N \geq 3$;
- a second group of P phase-legs, wherein each phase-leg of the second group comprises N switching cells connected in series between a respective one of the P phases of the first AC interface and a neutral potential of the second AC interface; and
- at least one controller, configured to control the first group of P phase-legs and the second group of P phase-legs to selectively provide a maximum apparent power at the first AC interface and at the second AC interface, and, in response to the detection of at least one failed switching cell of a first phase-leg, to switch the MMC into a limited output mode of operation, wherein the MMC provides a reduced maximum apparent power at the first AC interface and/or at the second AC interface, by controlling at least the first phase-leg, based on a tuning factor $k_{1ph}$, to output a reduced phase-leg voltage $U_{PhLeg,pk}^{max}$.

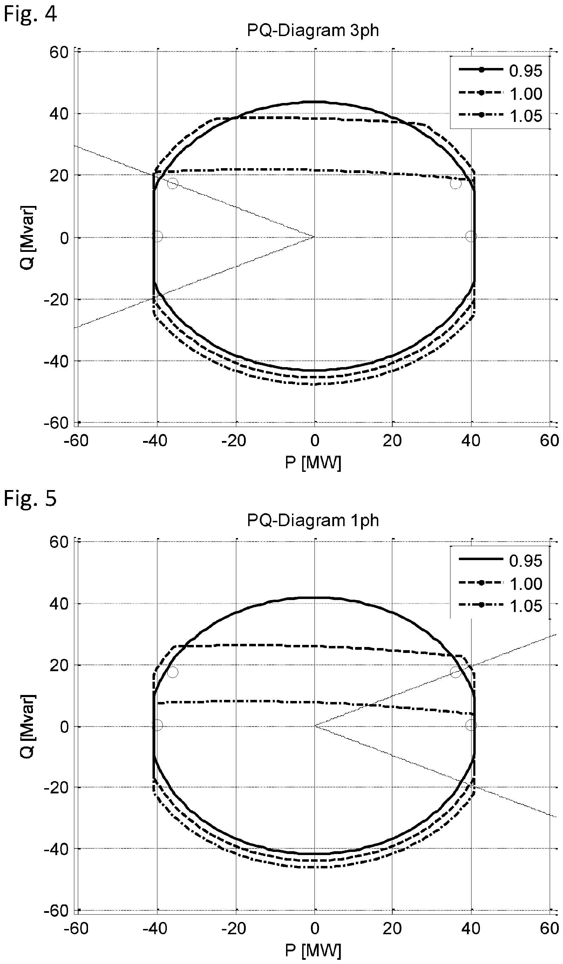

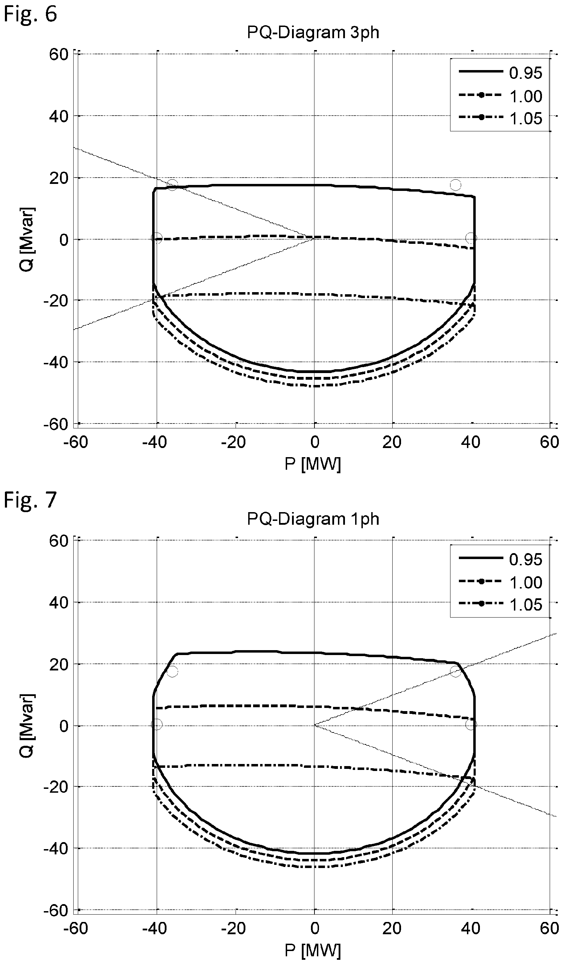

Among others, the inventors have found that a multi-to-single-phase direct modular multi-level converters can be operated even with some defective switching cells and without redundancy. This is achieved, at least in part, by the provision of a limited output mode, in particular a so-called *N-1* operation mode, with reduced power capability. By controlling the switching cells of at least the affected phase-leg, or even all the phase-legs, based on a tuning factor $k_{1ph}$ to output a reduced voltage, damages to other parts of the converter can be avoided, and harmonic distortion in the source and/or target network can be limited. This in turn enables to operate the MMC with reduced maximum apparent power capability, as shown for example in Figures 6 and 7, until the defective switching cell is repaired or replaced, at which time a maximum apparent power rating, as shown for example in Figures 4 and 5, can be reached again. As no or fewer redundant switching cells are required, the disclosed MMC has a lower component count, is simpler in its design and cheaper to manufacture.

In at least one embodiment, the MMC is configured to, in a normal mode of operation with no failed switching cell, selectively provide the maximum apparent power at the first AC interface and at the second AC interface using all of the 2NP switching cells, as shown for example in Figures 4 and 5. This alleviates the need to provide any redundant switching cells in a MMC.

In at least one embodiment, the MMC is configured to, in the limited output mode of operation with at least one failed switching cell, in particular a *N-1* mode of operation with one failed switching cell, selectively provide the reduced maximum apparent power at the first AC interface and at the second AC interface using a subset of the switching cells excluding at least the one failed switching cell, as shown for example in Figures 6 and 7. This allows to spread a switching voltage across all remaining, operating switching cells.

According to a further aspect, a three-to-single-phase (3ph/1ph), AC/AC railway intertie is provided. The railway intertie comprising at least one MMC according to the first aspect. Such a railway intertie can be implemented with a lower number of components at lower cost and still provides a high degree of reliability, e.g. for providing at least a reduced amount of power into a railway supply grid.

According to a further aspect, a method for operating a direct multi-to-single-phase MMC comprising a plurality of phase-legs, each phase-leg comprising a plurality of switching cells, in particular the MMC according to the first aspect, is provided. The method comprises the following steps:

- using, in a normal mode of operation of the MMC, all switching cells of all phase-legs to provide a maximum apparent power at the first AC interface to a multi-phase, first AC power grid and at a second AC interface to a single-phase, second AC power grid;
- detecting whether at least one switching cell of a first phase-leg of the plurality of phase-legs has failed;
- determining at least one control parameter based on a tuning factor $k_{1ph}$ for operating the MMC in a limited output mode of operation with a reduced maximum apparent power rating compared to a maximum apparent power rating; and
- in response to detecting that at least one switching cell of a first phase-leg has failed, controlling the remaining switching cells of at least the first phase-leg in the limited output mode based on the determined at least one control parameter to provide a reduced maximum apparent power at the first AC interface and/or at the second AC interface.

The method described above is particularly suitable for reliably operating a MLC with no redundant switching cell.

The present disclosure comprises several aspects as detailed above. Every feature described with respect to one of the aspects is also disclosed herein with respect to the other aspect, even if the respective feature is not explicitly mentioned in the context of the specific aspect.

The accompanying figures are included to provide a further understanding. In the figures, elements of the same structure and/or functionality may be referenced by the same reference signs. It is to be understood that the embodiments shown in the figures are illustrative representations and are not necessarily drawn to scale.

Figure 1 shows a three-to-single-phase (3ph/1ph) AC/AC direct MMC in the form of a railway intertie.

Figure 2 shows a possible design for a bipolar switching cell.

Figure 3 shows a schematic view of a control loop for a MMC.

Figures 4 and 5 show typical example PQ-diagrams for a three-phase and a single-phase side of a 3ph/1ph MMC in a normal operation mode, respectively.

Figures 6 and 7 show typical example PQ-diagrams for a three-phase and a single-phase side of a 3ph/1ph MMC in an *N-1* operation mode.

Figure 8 shows a schematic diagram of a method for determining control signals for operating a MMC in a normal operation mode and a limited output mode, respectively.

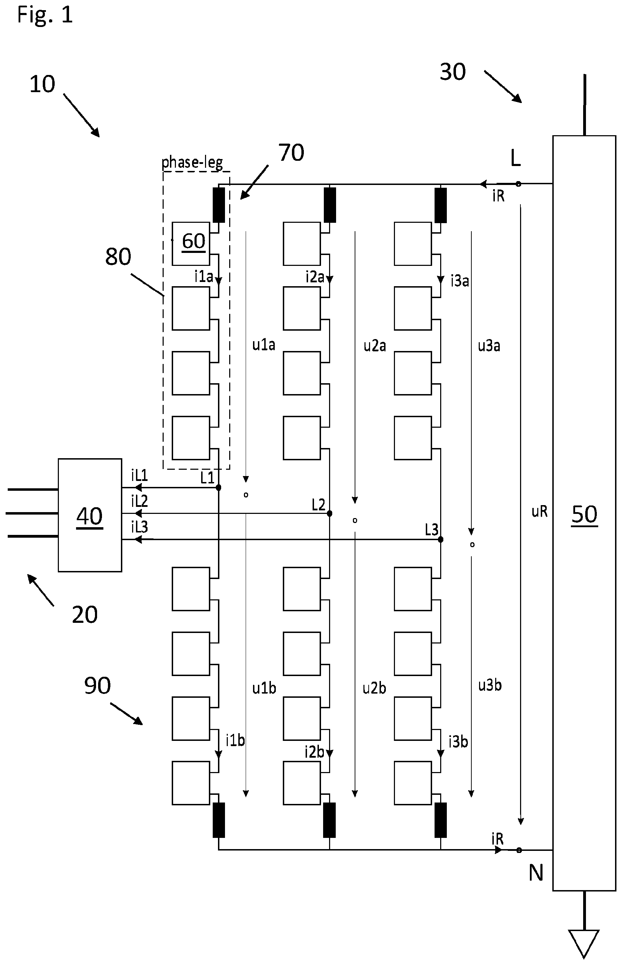

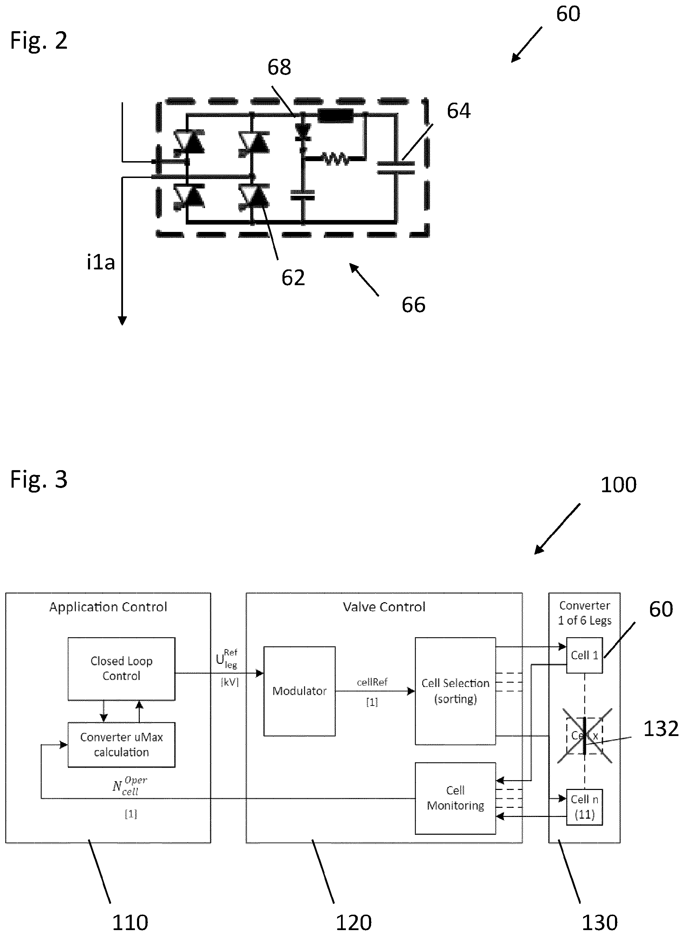

Before specific details of the disclosed invention are described, at first, the configuration of an exemplary MLC is described with reference to Figures 1 and 2.

Figure 1 shows the topology of a MMC 10, which may be used, for example, in a railway intertie. As shown, it regards the interconnection of a first power grid 20, for example a three-phase industrial grid with either 50 Hz or 60 Hz, with a second power grid 30, for example a single-phase railway supply grid operating at either 16.7 Hz or 25 Hz.

As shown in Figure 1, the MMC 10 comprises three upper phase-legs 80, as well as three lower phase-legs 90, in a full bridge configuration. Each one of the upper phase-legs 80 is connected between a respective phase L1, L2 or L3 of a first AC interface 40, and a single phase L of a second AC interface 50. Correspondingly, each one of the lower phase-legs 90 is connected between the respective phases L1, L2 or L3 of the first AC interface 40, and a neutral potential N of the second AC interface 50.

Although not shown in Figure 1, the first AC interface 40, and/or the second AC interface 50 may comprise further components for coupling the respective phases L1, L2 and L3 as well as L and N to corresponding terminals of the first power grid 20 and the second power grid 30, respectively. In particular, the first AC interface 40 may comprise a transformer to transform an incoming high voltage from a three-phase industrial grid, i.e. a voltage in excess of 1 kV, such as a voltage of 30, 50 or 130 kV, to an intermediate voltage at which the MMC 10 operates. Similar, the second interface 50 may also comprise a transformer for voltage matching. Moreover, the neutral line N of the second AC interface 50 may be coupled to an electrical ground potential. That is to say, the second power grid 30 may comprise only a single conductor, connected directly or indirectly to an overhead line of a railway network.

Each of the phase-leg 80 and 90 comprises a plurality of switching cells 60 as well as an inductance 70 connected in series. Each switching cell 60 can be selectively switched into the respective phase-leg and acts as a voltage and current source to form a desired wave form on the output side of the MMC 10, for example at the second AC interface 50. In the depicted embodiment, each one of the three upper phase-legs 80 and each one of the three lower phase-legs 90 comprises four switching cells 60, i.e. a total of 24 switching cells for the MMC 10. Of course, dependent on the specific design or application, fewer or more switching cells 60 may be used.

As shown in Figure 1, each of the phase-legs 80 and 90 provides a corresponding voltage u1a, u2a, u3a, u1b, u2b and u3b, which, when added up as indicated in Figure 1, correspond to the single-phase output voltage uR on the second AC interface 50. Similarly, in terms of current, currents i1a, i2a, i3a, i1b, i2b and i3b flow through each one of the phase-legs 80 and 90 as shown, which, when added up as indicated in Figure 1, correspond to the three (input) currents iL1, iL2 and iL3 of the MMC 10 provided by the first AC interface 40 and (output) current iR provided by the MMC 10 to the second AC interface 50.

Figure 2 shown an exemplary design for one of the switching cells 60 in the form of a bipolar switching cell. As shown therein, the switching cell 60 comprises four reverse conducting integrated gate-commutated thyristors (RC-IGCTs) 62 in a bridge rectifier configuration, a storage capacitor 64 and a clamp circuit 66 comprising, among others, a clamping diode 68. The switching cell 60 may be selectively activated and deactivated, i.e. the storage capacitor may be switched into the respective phase-legs 80 or 90, by applying corresponding control signals to the control gates of the RC-IGCTs 62. In the specific embodiment, the switching cell 60 has four possible modes, +Ucap (storage capacitor 64 switched into the respective phase leg 80 or 90 in a first direction), -Ucap (storage capacitor 64 switched into the respective phase leg 80 or 90 in an opposite, second direction), zero vector (storage capacitor 64 is bypassed) and diode rectifier (switching cell 60 is deactivated which means pulses are blocked). Other design for switching cells 60 are known to the skilled person and are therefore not described in detail at this stage.

In conventional MMC systems, a so-called N+1 redundancy is used. This means that, in the converter design shown in Figure 1, the MMC 10 contains more switching cells 60 than would be needed for enabling the MMC 10 to maintain its maximum apparent power. During normal operation, the switching cells 60 are charged only to a fraction of their maximal voltage rating. In case of a switching cell failure, the defective cell is shortened, for example using a bypass switch or bypass thyristor (not shown in Figures 1 and 2) and the remaining, healthy cells are charged to a higher voltage. For example, in the embodiment shown in Figure 1, in normal operation all four switching cells 60 of each one of the phase-leg 80 and 90 may be charged to 75% of their nominal peak voltage. In case of a cell failure, the remaining three switching cells 60 are charged to 100% of their nominal peak voltage. In this way, the phase leg 90 can maintain its peak voltage output even in case a switching cell 60 fails.

According to one aspect of the disclosure, it is proposed not to provide any redundant switching cells 60 in a MMC 10. Instead, the MMC 10 and its switching cells 60 are designed such that all switching cells 60 are fully utilized during a normal operation mode of the MMC 10, to enable the MMC 10 to provide its maximum apparent power at the first AC interface (40) and at the second AC interface (50). In other words, it is decided not to build N+1 redundancy into the system. Among others, this reduces the part count, complexity and converter system costs. In case one or more switching cells 60 of the MMC 10 fail, the MMC 10 is operated in a so called limited output mode with reduced power capability. Specifically, in the limited output mode, the MMC 10 provide at least a reduced maximum apparent power, for example by reducing a reactive power at the first AC interface 40 and at the second AC interface 50. In particular in case of overvoltage conditions of the respective network AC network, the MMC 10 may also provide a reduced active power at the first AC interface 40 and at the second AC interface 50. Reducing its maximum power eliminates the need to trip the MMC 10 when a switching cell 60 is failing. The limited output mode can be maintained up to a point, at which the defective cell 60 is repaired or replaced. Thereafter, the maximum apparent power, based on, for example, a full reactive power, can be reached again by switching the converter back into its normal operation mode.

Figure 3 shows a schematic view of a control loop 100 for a MMC, for example the MMC 10 of Figure 1. The control loop 100 comprises an application control part 110, a valve control part 120 and a converter leg part 130. Typically, one valve control part 120 and one converter leg part 130 will be provided for each phase-leg of the MMC 10, although some components may also be shared by multiple phase-legs. Only a single valve control part 120 and a single converter leg part 130 is shown in Figure 3 for reasons of representational simplicity.

The application control part 110 may be implemented by one or more first, high or converter-level controllers.

It queries the one or more valve control part(s) 120 and/or converter leg part(s) 130 for the number of switching cells 60 in operation. Based on this information, it determines, in a closed loop manner, various system parameters for operating the MMC 10 in one of multiple modes of operation, including, for example, a normal mode of operation and limited output mode of operation. Such system parameters may be computed in real-time by the controller or may be selected from corresponding sets of pre-determined parameters, computed, for example, at design time. Among others, the application control part 110 determines a reference voltage $U_{leg}^{Ref}$ for each of the converter legs. The reference voltage $U_{leg}^{Ref}$ corresponds to the sum of the reference voltages of both converter interfaces to the respective power grids for a certain operating point. It should not exceed a maximum phase-leg voltage corresponding to a sum of all cell (or capacitor) voltages as detailed below.

The valve control part 120 may be implemented by one or more second, medium or phase-leg-level controllers. It modulates the reference voltage $U_{leg}^{Ref}$ received from the application control part 110 by determining a number $cellRef_{Leg}$ of positive or negative switching cells 60 required to generate a desired voltage across the respective phase leg. Based on the determined number of cell, a subset from the operational switching cell 60 of the respective converter leg are selected by providing one or more corresponding control signals to each one of the switching cells 60. Switching cells 60 may selected specifically to balance a cell capacitor voltage. For example, a cell with a lowest voltage is taken if the desired level command charges the cell capacitor considering the actual current sign. In addition, a second priority loss distribution may also be a used as a selection criteria. Moreover, in the embodiment depicted in Figure 3, the valve control part 120 is also responsible for monitoring the operational states of each one of the switching cells 60, and reporting the number of operational switching cells 60 back to the application control part 110.

The converter leg part 130 comprises the actual switching cells, and corresponding bypass circuitry 132, as well as low level cell control and monitoring circuits (not shown). It may be implemented by discrete electrical components and/or one or more third, low or cell-level controllers. Based on the control signals provided by the valve control part 120 used for cell selection, it selectively connects or disconnects a corresponding switching cell 60 to or from the respective phase-leg 80 or 90. Moreover, in case a switching cell 60 is considered to be defective, it is bypassed by a corresponding bypass switch. This may be determined, for example, by the valve control part 120 based on the detection of an overvoltage across the respective switching cell 60.

In the depicted control loop 100, a normal mode of operation may correspond to N operational switching cells 60 for each phase-leg. In a corresponding limited output mode, only N-1 operational switching cells 60 may be available and used for power storage and conversion. Accordingly, this mode is also referred to *N-1* mode, as all but one switching cells 60 of a phase-leg are operational.

To prevent any damage in the remaining switching cells 60, as shown in Figure 3, the application control part 110 reduces the reference voltage $U_{leg}^{Ref}$, for example from a full range of -22 to +22 kV in the normal mode of operation to a reduced range of -20 to +20 kV in the N-1 mode of operation. Limiting the reference voltage $U_{leg}^{Ref}$ prevents the MMC 10 from overmodulation with additional unwanted harmonics.

In the described embodiment, the reduced reference voltage $U_{leg}^{Ref}$ is applied to all phase-legs 80 and 90, and not only to the converter leg 80 or 90 comprising the defective switching cell 60 as further detailed below. Thus, for all remaining phase legs 80 or 90, i.e. phase legs without damages switching cells 60, a capacitor voltage of its cells 60 is reduced accordingly.

During normal converter operation, i.e. with all switching cells 60 in operation, all converter phase-legs are charged to their maximum voltage levels. As an example, the resulting PQ-capabilities of the converter for the three-phase and the single-phase side of a 3ph/1ph MMC 10 are illustrated in Figures 4 and 5, respectively.

Therein, different points of common coupling (PCC) voltages for the three-phase interface 40 are shown in Figure 4, e.g. for a five percent undervoltage ($U_{PCC, 3ph}$ = 0.95), a nominal voltage ($U_{PCC, 3ph}$ = 1.00), and a five percent overvoltage ($U_{PCC, 3ph}$ = 1.05) of the first power grid 20. Similarly, different PCC voltages for the single-phase interface 50 are shown in Figure 5, e.g. for a five percent undervoltage ($u_{PCC, 1ph}$ = 0.95), a nominal voltage ($u_{PCC, 1ph}$ = 1.00), and a five percent overvoltage ($u_{PCC, 1ph}$ = 1.05) of the second power grid 30. Among others, Figures 4 and 5 show that the PQ diagrams get flatter towards an overvoltage situation, i.e. that a capacitive, reactive power is reduced in case an actual grid voltage exceeds a nominal grid voltage.

Regarding the converter dimensioning in terms of voltage, the maximum phase-leg voltage $U_{PhLeg,pk}^{max}$ (considering overmodulation) is calculated as

$$U_{PhLeg,pk}^{max} = \frac{\sqrt{2}\left(U_{1ph}^{max} + U_{3ph}^{max}\right)}{2} \qquad (1)$$

where $U_{1ph}^{max}$ is the maximum single-phase side root mean square (rms) voltage, $U_{3ph}^{max}$ is the maximum phase-line to phase-line rms voltage of the three-phase side.

This can be blocked by the minimum available DC voltage $U_{cell}^{min}$ of a phase-leg as

$$U_{DC}^{min} = N_{cell}^{min} U_{cell}^{min} \qquad (2)$$

where $U_{cell}^{min}$ is a minimum cell voltage based on provided factors, such as an inherent low-frequency ripple. From the equality one can obtain the limit condition and therefore calculate the minimum required number of converter cells as

$$N_{cell}^{min} = \frac{U_{PhLeg,pk}^{max}}{U_{cell}^{min}} \qquad (3)$$

From (2) it is clear that when a cell fails it is no longer possible to keep the full DC voltage in the phase-leg, unless the remaining, healthy individual cells 60 are charged to a higher voltage. However, this is only possible up to a specific level if the design margins as well as semiconductor safe operating area (SOA) limitations allow it.

In the case of a 3ph/1ph MMC 10, such as a railway intertie, if no redundant converter cell is provided, the impact of a cell loss on the converter performance will be considerable. This is due to the fact that the voltage in both grid sides is given, i.e. fixed by external factors.

To mitigate negative effects, such as converter damage, harmonic distortions and/or low reliability, according to an aspect of the present disclosure, when a cell failure occurs, the affected phase-leg no longer provides its maximum peak voltage level. To achieve symmetric operation, all other five phase-legs also reduce their maximum peak voltages.

In order not to have only one side experiencing the voltage loss, a tuning factor $k_{1ph}$ is introduced in the converter design which can been freely chosen to tune the voltage capability between the two converter sides. The resulting reduced peak voltage $U_{3ph,pk\_Red}^{max}$ at the three-phase interface 40 can then be expressed as follows:

$$U_{3ph,pk\_Red}^{max} = 2\left(N_{cell}^{min} - 1\right)U_{cell}^{min} - \underbrace{k_{1ph}U_{1ph,pk}^{max}}_{U_{1ph,pk\_Red}^{max}} \qquad (4)$$

where $U_{1ph,pk}^{max}$ is maximum peak voltage capability at the single-phase interface 50 when the MMC 10 operates with N cells. Among others, the tuning factor $k_{1ph}$ controls how much active and/or reactive power the MMC 10 can lose in the limited output mode of operation. Typical values of $k_{1ph}$ are in the range of 0.87-0.95. Moreover, a value of

$k_{1ph} = \left(1 - \frac{1}{N_{cell}^{min}}\right)$ splits equally the voltage difference on the two sides, i.e. between the two AC interfaces 40 and 50.

During the limited output mode of operation, operational switching cells 60 of the remaining, unaffected phase-legs may be disabled temporarily, such that the number of remaining cells 60 is equal for all phase-legs. However, in the described solution, all available switching cells 60 remain operational, such that a correspondingly lower cell voltage is applied to switching cells 60 of phase-legs without a defective cell 60.

Figures 6 and 7 shows the resulting PQ-diagrams for a limited output mode of a one cell loss failure example case (*N-1* mode of operation) using the proposed control method, for the same converter topology and PCC values as used for the PQ-diagrams for the normal operation mode shown in Figures 4 and 5.

As indicated therein, in case of a loss of one cell, a MMC 10 injecting energy from a three-phase power grid 20 into a single-phase power grid 30, the apparent power on the both sides of the MMC 10 is significantly reduced in the *N-1* mode of operation.

Assuming the cell average voltage has been designed with some margin, the virtual converter DC-link (average voltage across all converter cells) margin $u_{DC}^{marg}$ can be defined as follows:

$$u_{DC}^{marg} = \frac{\overline{U}_{cell}^{max}}{\overline{U}_{cell}} \qquad (5)$$

where $\overline{U}_{cell}^{max}$ is the maximum allowable average cell voltage and $\overline{U}_{cell}$ is the nominal average cell voltage:

For a universal implementation approach the virtual DC-link reference $u_{DC}^{ref}$ is calculated in real-time in per unit:

$$u_{DC}^{ref} = min\left(1, \frac{N_{cell}^{Oper}}{N_{cell}^{min}} u_{DC}^{marg}\right) \qquad (6)$$

Therein, $N_{cell}^{Oper}$ is the lowest number of operational cells across all phase-legs at any given time. $N_{cell}^{min}$ is the minimum number of operating cells, which are required in order to obtain a full PQ diagram for a specific design.

When $u_{DC}^{ref}$ is lower than 1 per unit, then the maximum values of the safe operating area (SOA) are adapted accordingly, in order to protect the converter components by reducing its maximum apparent power. Typically the capacitive reactive power (overexcited) is limited due to the loss of one cell with consequent lower maximum voltage capability. Inductive reactive power may have to be injected (underexcited) in order to avoid an overmodulation when a point of common coupling (PCC) voltage is high.

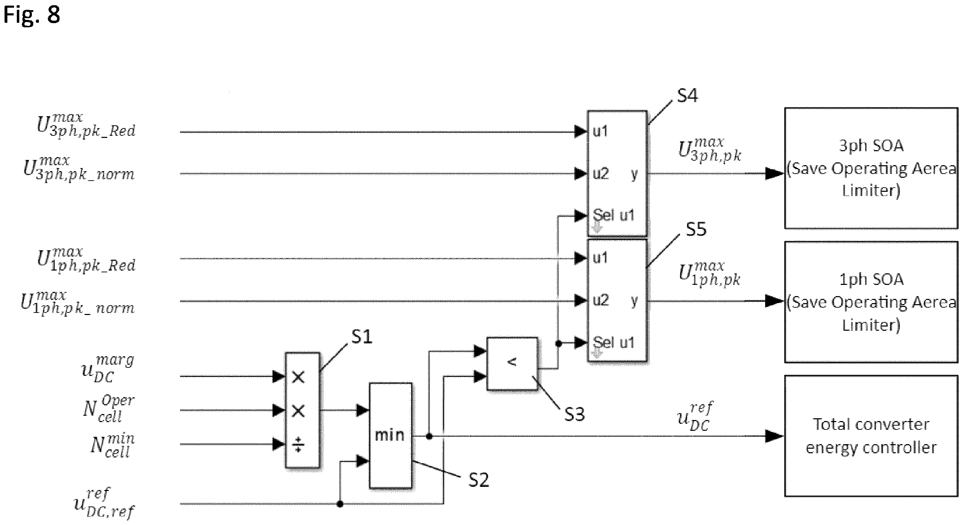

Figure 8 shows a schematic overview of a possible control implementation for the limited output mode. As shown therein, three different parameters are output for the operation of the MMC 10, depending, among others, on the number of switching cells 60 in operation.

As shown in the lower part of Figure 8, in a first step S1 the ratio of the number $N_{cell}^{Oper}$ of cells in operation and the minimum number $N_{cell}^{min}$ of cells in each converter leg provided to obtain the full PQ diagram, e.g. the maximum apparent power of the MMC 10, is multiplied with the DC margin $u_{DC}^{marg}$ to compute a maximum value for $u_{DC,max}^{ref}$ based on the current state of the MMC 10.

In a second step S2, the minimum of the $u_{DC,max}^{ref}$ value computed in step S1 and a reference value $u_{DC,ref}^{ref}$, e.g. 1 per unit, is selected as current value for the DC-link reference $u_{DC}^{ref}$ according to equation (7) above. The current value for the DC-link reference $u_{DC}^{ref}$ may be used to directly control the total energy of the MMC 10.

In a third step S3, the current value for the DC-link reference $u_{DC}^{ref}$ is compared with the reference value $u_{DC,ref}^{ref}$. In case the current value for the DC-link reference $u_{DC}^{ref}$ is smaller than the reference value $u_{DC,ref}^{ref}$, a first control signal sel_u1 is generated to operate the MMC 10 in a limited output mode. Otherwise, i.e. when the cell margin is sufficient to operate the MMC 10 with a desired power, no control signal or a second control signal, e.g. sel_u2, is generated to operate the MMC 10 in a normal operating mode.

In case the first control signal sel_u1 is provided in step S3, in steps S4 and S5, a predetermined reduced maximum converter voltage $U_{3ph,pk\_Red}^{max}$ for the three-phase side and a predetermined reduced maximum converter voltage $U_{1ph,pk\_Red}^{max}$ for the single-phase side, respectively, are selected. Alternatively, in case no control signal or the second control signal sel_u2 is provided in step S3, in steps S4 and S5, a predetermined normal or maximum converter voltage $U_{3ph,pk\_norm}^{max}$ for the three-phase side and a predetermined normal or maximum converter voltage $U_{1ph,pk\_norm}^{max}$ for the single-phase side, respectively, are selected. The selected values are output as parameters $U_{3ph,pk}^{max}$ and $U_{1ph,pk}^{max}$ and define a three-phase and single-phase SOA for the MMC 10.

In the control implementation described above with reference to Figure 8, various input parameters, including the minimum number $N_{cell}^{min}$ of cells in each converter leg required to obtain a full PQ diagram, the DC margin $u_{DC}^{marg}$, the reference value $u_{DC,ref}^{ref}$, the reduced maximum three-phase converter voltage $U_{3ph,pk\_Red}^{max}$, the reduced maximum single-phase converter $U_{1ph,pk\_Red}^{max}$, the maximum three-phase converter voltage $U_{3ph}^{max}$ and the maximum single-phase converter voltage $U_{1ph}^{max}$ may be precomputed at a design phase of the MMC 10 and may be selected in real-time based on the number $N_{cell}^{Oper}$ of cells in operations. In particular, the reduced maximum single-phase converter voltage $U_{1ph,pk\_Red}^{max}$ may correspond to the maximum single-phase converter voltage $U_{1ph}^{max}$ multiplied with a tuning factor $k_{1ph}$ selected at design time as defined in equation (4).

In other implementations, some or all of these values may be computed dynamically, i.e. during operation of the MMC 10, for example in real-time. Such an approach may provide greater flexibility, for example to deal with failure of multiple switching cells 60 in the same or different phase-legs 80 or 90.

Attention is drawn to the fact that the above limited output mode of operation may also be implemented in a MMC 10 comprising at least one redundant switching cell, for example, in case of *N+1* redundancy. In this case, a first cell failure can be compensated without reducing a maximum apparent power of the MMC 10. However, unlike conventional *N+1* converters, such a MMC 10 may continue to operate in the limited output mode of operation in case a second switching cell 60 fails in the same phase-leg as detailed above.

Moreover, while the description has focused on a three-to-single-phase converter mode, which is commonly used in railway interties, attention is drawn to the fact that the same approach can also be applied in a single-to-three-phase converter mode, or in another multi-to-single-phase or single-to-multi-phase converters.

Compared with other approaches, the presented solution is easy to implement, as it lowers the component count of the MMC 10 and does not require the introduction of a neutral shift at the first interfaces 40 and/or the second interfaces 50.

The embodiments shown in the Figures 1 to 8 as stated represent exemplary embodiments of the improved multilevel converter designs and method for their operation. Therefore, they do not constitute a complete list of all embodiments according to the improved multilevel converter designs and method for their operation. Actual converter circuits and operating methods may vary from the embodiments shown in terms of a number of phase-legs, switching cells per phase-leg, switching cell configuration, operating voltages, design parameters and exchanged control signals, for example.

Reference Signs

| 10 | MMC |
|---|---|
| 20 | (first) power grid |
| 30 | (second) power grid |
| 40 | (first) AC interface |
| 50 | (second) AC interface |
| 60 | (switching) cell |
| 62 | RC-IGCT |
| 64 | storage capacitor |
| 66 | clamp circuit |
| 68 | clamping diode |
| 70 | inductance |
| 80 | (upper) phase-leg |
| 90 | (lower) phase-leg |
| 100 | control loop |
| 110 | application control part |
| 120 | valve control part |
| 130 | converter leg part |
| 132 | bypass circuitry |

**Claims**

1.  A direct multi-to-single-phase, modular multi-level converter, MMC (10), comprising:

    - a first alternating current, AC, interface (40) for connecting the MMC (10) to a multi-phase, first power grid (20), in particular a three-phase power grid;
    - a second AC interface (50) for connecting the MMC (10) to a single-phase, second power grid (30);
    - a first group of P phase-legs (80), wherein each phase-leg (80) of the first group comprises N switching cells (60) connected in series between a respective one of P phases (L1, L2, L3) of the first AC interface (40) and a single phase (L) of the second AC interface (50), wherein P$\geq$2 and N$\geq$3;
    - a second group of P phase-legs (90), wherein each phase-leg (90) of the second group comprises N switching cells (60) connected in series between a respective one of the P phases (L1, L2, L3) of the first AC interface (40) and a neutral potential (N) of the second AC interface (50); and
    - at least one controller, configured to control the first group of P phase-legs (80) and the second group of P phase-legs (90) to selectively provide a maximum apparent power at the first AC interface (40) and at the second AC interface (50), and, in response to the detection of at least one failed switching cell (60) of a first phase-leg, to switch the MMC (10) into a limited output mode of operation, wherein the MMC (10) provides a reduced maximum apparent power at the first AC interface (40) and/or at the second AC interface (50) by controlling at least the first phase-leg, based on a tuning factor $k_{1ph}$, to output a reduced phase-leg voltage $U_{PhLeg,pk}^{max}$.

2.  The MMC (10) according to claim 1, wherein the MMC (10) is configured to,

    - in a normal mode of operation with no failed switching cell (60), selectively provide the maximum apparent power at the first AC interface (40) and at the second AC interface (50) using all of the 2NP switching cells (60); and
    - in the limited output mode of operation with at least one failed switching cell (60), in particular a *N-1* mode of operation with one failed switching cell, selectively provide the reduced maximum apparent power at the first AC interface (40) and at the second AC interface (50) using a subset of the switching cells (60) excluding the at least one failed switching cell.

3.  The MMC (10) according to claim 1 or 2, wherein the at least one controller is specifically configured to control the switching cells (60) of each phase-leg (80, 90), such that a maximum peak output voltage of the first AC interface (40) does not exceed $U_{3ph,pk\_Red}^{max} = 2\left(N_{cell}^{min} - 1\right)U_{cell}^{min} - k_{1ph}U_{1ph,pk}^{max}$, wherein $U_{cell}^{min}$ is the minimum cell voltage, $U_{1ph,pk}^{max}$ corresponds to the maximum peak voltage of the second AC interface (50) without lost cell, and $U_{3ph,pk\_Red}^{max}$ corresponds to the resulted reduced maximum peak voltage of the first AC interface (40) with one lost cell.

4. The MMC (10) according to claim 3, wherein the tuning factor $k_{1ph}$ corresponds to $\left(1 - \frac{1}{N_{cell}^{min}}\right)$, wherein $N_{cell}^{min}$ corresponds to the minimum number of switching cells (60) required to provide the maximum apparent power at the first AC interface (40) and at the second AC interface (50).

5. The MMC (10) according to any one of claims 1 to 4, wherein the tuning factor $k_{1ph}$ lies in the range of 0.7 to 1.0, preferably in the range of 0.87 to 0.95.

6. The MMC (10) according to any one of claims 1 to 5, wherein the at least one controller is specifically configured to compute a virtual DC-link reference voltage $u_{DC}^{ref}$ in real time, wherein $u_{DC}^{ref} = min\left(1, \frac{N_{cell}^{Oper}}{N_{cell}^{min}} u_{DC}^{marg}\right)$, $N_{cell}^{Oper}$ corresponds to the number of remaining operational switching cells (60), $N_{cell}^{min}$ corresponds to the minimum number of switching cells (60) required to provide the maximum apparent power at the first AC interface (40) and at the second AC interface (50), $u_{DC}^{ref}$ corresponds to the cell average voltage reference, and $u_{DC}^{marg}$ corresponds to a voltage margin in the cell in normal operation.

7. The MMC (10) according to any one of claims 1 to 6, wherein the at least one controller is specifically configured to:
    - compute a 1-phase converter voltage $U_{1ph,pk}^{max}$ based on a normal $U_{1ph,pk\_norm}^{max}$ and a reduced $U_{1ph,pk\_Red}^{max}$, wherein a ration between $U_{1ph,pk\_Red}^{max}$ and $U_{1ph,pk\_norm}^{max}$ corresponds to the tuning factor $k_{1ph}$; and/or
    - compute a 3-phase converter voltage $U_{3ph,pk}^{max}$ based on a normal $U_{3ph,pk\_norm}^{max}$ and a reduced $U_{3ph,pk\_Red}^{max}$.

8. The MMC (10) according to any one of claims 1 to 7, comprising:
    - a converter-level control unit, configured to determine a number $N_{cell}^{Oper}$ of cells (60) in operation and to determine, based on the number $N_{cell}^{Oper}$ of cells (60) in operation, a maximum phase-leg voltage $U_{leg}^{Ref}$ for each phase-leg of the first and second groups; and
    - at least one phase-leg-level control unit, configured to modulate the maximum voltage $U_{leg}^{Ref}$ and select at least a subset of the cells (60) in operation.

9. A three-to-single-phase, 3ph/1ph, AC/AC railway intertie comprising at least one MMC (10) according to any one of claims 1 to 8.

10. A method for operating a direct multi-to-single-phase, modular multi-level converter, MMC (10), comprising a plurality of phase-legs (80, 90), each phase-leg (80, 90) comprising a plurality of switching cells (60), in particular the MMC (10) according to any one of claims 1 to 8, the method comprising:

    - using, in a normal mode of operation of the MMC (10), all switching cells (60) of all phase-legs (80, 90) to provide a maximum apparent power at a first AC interface (40) to a multi-phase, first alternating current, AC, power grid (20) and at a second AC interface (50) to a single-phase, second AC power grid (30);

- detecting whether at least one switching cell (60) of a first phase-leg of the plurality of phase-legs (80, 90) has failed;

- determining at least one control parameter based on a tuning factor $k_{1ph}$ for operating the MMC (10) in a limited output mode of operation with a reduced maximum apparent power rating compared to a maximum apparent power rating; and

- in response to detecting that at least one switching cell (60) of a first phase-leg has failed, controlling the remaining switching cells (60) of at least the first phase-leg in the limited output mode based on the determined at least one control parameter to provide a reduced maximum apparent power at the first AC interface (40) and/or at the second AC interface (50).

11. The method of claim 10, wherein the tuning factor $k_{1ph}$ is predetermined before a failure of the at least one switching cell (60) is detected, and the control of the switching cells (60) is based on determining at least one of the following parameters in real-time: a maximum converter voltage $U_{1ph,pk}^{max}$ for the single-phase side, a maximum converter voltage $U_{3ph,pk}^{max}$ for the three-phase side, and a DC-link reference $u_{DC}^{ref}$.

12. The method of claim 10 or 11, specifically comprising the following steps:

- computing a ratio of the number $N_{cell}^{Oper}$ of cells (60) in operation and the minimum number $N_{cell}^{min}$ of cells (60) in each converter leg provided to obtain the maximum apparent power of the MMC (10);

- multiplying the computed ratio with the DC margin $u_{DC}^{marg}$; to obtain a maximum DC-link reference $u_{DC,max}^{ref}$ for the number $N_{cell}^{Oper}$ of cells (60) in operation;

- selecting a smaller one of the obtained maximum DC-link reference $u_{DC,max}^{ref}$ and a reference DC-link reference $u_{DC,ref}^{ref}$; and

- generating a first control signal (sel_u1) to operate the MMC (10) in the limited output mode if the obtained maximum DC-link reference $u_{DC,max}^{ref}$ is smaller than the reference value $u_{DC,ref}^{ref}$.

13. The method of claim 10, wherein the tuning factor $k_{1ph}$ is determined in real-time and depends on a number of failed switching cells (60) detected.

14. The method of any one of claims 10 to 13, wherein the remaining switching cells (60) of the plurality of phase-legs are controlled to limit their capacitive reactive power in response to detecting that at least one switching cell (60) of a first phase-leg has failed.

15. The method of one of claims 10 to 14, wherein the remaining switching cells (60) of the plurality of phase-legs (80, 90) are controlled to inject an inductive reactive power in response to detecting the at least one failed switching cell.

Fig. 1

## Fig. 2

## Fig. 3

Fig. 4

## PQ-Diagram 3ph

Fig. 5

## PQ-Diagram 1ph

Fig. 6

PQ-Diagram 3ph

Fig. 7

PQ-Diagram 1ph

## Fig. 8

EP 4 311 094 A1

Europäisches
Patentamt

European
Patent Office

Office européen
des brevets

# EUROPEAN SEARCH REPORT

Application Number

EP 22 18 6040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2019/096417 A1 (ABB SCHWEIZ AG [CH]) 23 May 2019 (2019-05-23) <br><br> * figure 1 * <br> ----- | 1-5, 7-11, 13-15 | INV. <br> H02M5/293 <br> H02M7/483 <br> H02M1/32 |
| Y | RAZANI RAMIN ET AL: "Fault-Tolerant Operation of the DC/DC Modular Multilevel Converter Under Submodule Failure", IEEE JOURNAL OF EMERGING AND SELECTED TOPICS IN POWER ELECTRONICS, IEEE, PISCATAWAY, NJ, USA, vol. 9, no. 5, 8 January 2021 (2021-01-08), pages 6139-6151, XP011880560, ISSN: 2168-6777, DOI: 10.1109/JESTPE.2021.3050122 [retrieved on 2021-09-29] * page 6141 - page 6146; figures 1, 6 * <br> ----- | 1-5, 7-11, 13-15 | |
| | | | **TECHNICAL FIELDS SEARCHED (IPC)** <br><br> H02M |

The present search report has been drawn up for all claims

| Place of search | Date of completion of the search | Examiner |
|---|---|---|
| The Hague | 14 December 2022 | van Wesenbeeck, R |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 22 18 6040

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2022

| Patent document cited in search report | | Publication date | Patent family member(s) | | Publication date |
|---|---|---|---|---|---|
| WO 2019096417 | A1 | 23-05-2019 | EP | 3714538 A1 | 30-09-2020 |
| | | | WO | 2019096417 A1 | 23-05-2019 |

EPO FORM P0459

For more details about this annex : see Official Journal of the European Patent Office, No. 12/82